# FASCICULE DE BREVET EUROPEEN

(11) **EP 1 025 309 B1**
(45) Date de publication et mention de la délivrance du brevet: **12.06.2002**
(21) Numéro de dépôt: 98905469.7
(22) Date de dépôt: 30.01.1998
(51) Int. Cl.: D21G 3/00, B08B 1/00

(54) **INSTALLATION DE DEPOUSSIERAGE SUR MACHINE DE PRODUCTION DE PAPIER CREPE**
EINRICHTUNG ZUR ENTSTAUBUNG AN EINER MASCHINE ZUR PRODUKTION VON KREPP-PAPIER
DUST EXTRACTING INSTALLATION ON MACHINE PRODUCING CREPE PAPER

(30) Priorité: 03.02.1997 FR 9701171
(43) Date de publication de la demande: 09.08.2000
(73) Titulaire: Georgia-Pacific France, 68320 Kunheim (FR)
(72) Inventeur: MARCHAL, Paul, F-68800 Leimbach (FR)
(74) Mandataire: Cortier, Sophie
(86) Numéro de dépôt international: FR9800178
(87) Numéro de publication internationale: WO9833976

(56) Documents cités:
- EP-A- 0 310 161
- DE-A- 3 641 954
- DE-A- 3 800 669
- GB-A- 2 217 225
- DATABASE WPI Section Ch, Week 8951 Derwent Publications Ltd., London, GB; Class F01, AN 89-376216 [51] XP002043891 & RO 97 247 A (INST STIINT PROTECT) , 30 juin 1989

## Description

L'invention concerne une installation de dépoussiérage sur machine de production de papier crêpé.

L'invention concerne plus particulièrement une machine pour la fabrication en continu de papier crêpé, du type dans lequel la feuille après formation, égouttage et éventuellement séchage partiel est appliquée sur un cylindre de séchage convenablement chauffé. Après séchage la feuille est décollée du cylindre au moyen d'une lame de crêpage qui racle la surface du cylindre selon un angle approprié. La feuille, ainsi décollée et crêpée, est guidée longitudinalement vers une enrouleuse.

On fabrique ainsi de l'ouate de cellulose ou du papier tissu pour des usages domestiques ou sanitaires comme papier toilette, essuie-tout, mouchoir, serviette, etc.

La lame de crêpage, en raclant le cylindre, permet le décollement de la feuille et la formation de lignes de crêpage. Elle provoque aussi l'arrachement de poussières et de fibres de papier en quantité plus ou moins importante selon la qualité de la pâte, le taux de siccité atteint par la feuille ou, éventuellement, l'incorporation d'agents déliants destinés à en améliorer la douceur. Une partie de ces poussières et de ces fibres tend à suivre le défilement du papier qui, du fait de sa grande vitesse, entraîne avec lui une couche d'air le long de chacune de ses deux faces. Cette masse d'air en mouvement emporte beaucoup de poussières.

Toutefois, une plus grande quantité encore de poussières ou d'amas de fibres tend à être dégagée, au niveau de la lame de crêpage, dans une zone comprise entre la feuille de papier décollée et le cylindre, en dessous de ces deux surfaces.

Les poussières ainsi dégagées tendent donc à s'accumuler sur l'installation de production de papier et dans le bâtiment dans lequel l'installation est contenue. Elles créent des conditions environnementales défavorables pour les opérateurs travaillant autour de la machine ou à proximité dans le bâtiment.

Par ailleurs, les poussières et les fibres arrachées forment une matière fortement inflammable qui risque de prendre feu à la moindre étincelle susceptible d'apparaître entre la lame de crêpage et le cylindre de séchage notamment, ou dans toute autre zone de la machine ou du bâtiment dans laquelle elles s'accumulent.

Le cylindre de séchage est généralement muni d'une hotte de chauffage qui est une autre source potentielle d'inflammation des poussières accumulées sur l'installation.

Enfin, ces particules fibreuses indésirables peuvent perturber le fonctionnement de la machine ou affecter la qualité du papier produit.
Afin de limiter la dispersion des poussières, il a déjà été proposé de confiner l'installation elle-même pour éviter que ces poussières ne se dispersent dans tout le bâtiment. On a disposé des capots sur les parties de la machine entre le cylindre chauffant et l'enrouleuse, ainsi que sur la bobine elle même. A l'intérieur de ces enceintes, on a prévu des caissons d'aspiration pour créer une circulation d'air favorable. Ces moyens se sont révélés relativement efficaces pour prévenir les fuites de poussières vers la salle des machines et y limiter les risques d'incendie. Toutefois, l'accumulation sur la machine elle-même de poussières et de fibres arrachées reste un problème important à résoudre.

Bien entendu, l'accumulation de poussières est particulièrement importante dans une zone située au voisinage de la lame de crêpage et juste en dessous de celle-ci.

Il a déjà été proposé dans le document US-A-5.011.574 une machine de production de papier crêpé qui est munie d'un dispositif de dépoussiérage avec aspiration dont les prises d'air sont agencées au voisinage immédiat de la lame de crêpage.

Un autre document EP-A-0.310.161 décrit et représente un dispositif destiné à aspirer les poussières véhiculées par la couche d'air qui suit le mouvement de défilement de la feuille de papier.

Le document US-A-5.466.298 décrit un dispositif de dépoussiérage de la feuille de papier dans lequel de l'air comprimé est soufflé très près de l'une des faces de la feuille de papier pour contrarier l'écoulement de la masse d'air qui suit le défilement de la feuille de papier. En se mélangeant avec l'air comprimé, cette masse d'air est arrêtée puis aspirée par un dispositif d'aspiration adjacent.

L'ensemble de ces techniques, si elles permettent de diminuer la quantité de poussières qui se dégagent autour de l'installation ou qui s'accumulent sur la machine, nécessite le traitement et le dépoussiérage de très grandes masses d'air. Les caissons présentent l'inconvénient d'être très difficiles à contrôler. Ils sont notamment facilement bouchés par des agrégats de poussières ou de fibres. De plus, par leur action ponctuelle, elles n'apportent pas une solution globale aux problèmes posés par la formation de poussières lors de l'opération de crêpage du papier.

Pour apporter une solution aux problèmes posés par la production de poussières créées lors du crêpage du papier, l'invention propose une installation de dépoussiérage sur une machine du type décrit précédemment. Elle est caractérisée en ce quelle comprend un moyen formant rideau d'eau pour capter et entraîner les particules fibreuses en suspension dans l'air disposé, transversalement à la direction de défilement de la feuille de papier, sous la feuille entre le cylindre et l'enrouleuse.

L'application d'un tel dispositif présente de nombreux avantages. En effet, il s'est révélé être d'une très grande efficacité dans l'entraînement des particules fibreuses en suspension, notamment lorsque l'écoulement de l'eau le long de la paroi est turbulent. Il permet également l'évacuation des amas plus importants et évite la formation d'accumulations susceptibles de perturber le fonctionnement de la machine.

Selon d'autres caractéristiques de l'invention :
- le moyen formant rideau d'eau comporte une paroi sensiblement verticale et un moyen d'alimentation en eau avec déversoir disposé de façon à former un film d'eau continu, homogène et permanent le long de la paroi;
- le moyen formant rideau d'eau est disposé en dessous de la lame de crêpage. Il permet ainsi de capter directement les poussières et amas de fibres produits à ce niveau;
- un collecteur pour la réception et l'évacuation du liquide s'écoulant de la paroi est disposé en dessous de cette dernière tout en ménageant un passage d'air; il est avantageusement constitué d'un bac dont le fond est incliné pour permettre l'écoulement du liquide vers la fosse de récupération des eaux blanches; il est disposé sous la partie humide et la section de presse devant le cylindre sécheur. Ce collecteur est muni de rampes d'aspersion d'eau permettant d'évacuer les amas de fibres qui tombent du rideau d'eau;
- des moyens sont prévus pour engendrer une circulation d'air vers le bas au moins dans la zone environnant le moyen formant rideau d'eau. ces moyens favorisent encore le captage des particules fibreuses en suspension dans l'air;
   en particulier,
- un moyen pour engendrer une circulation d'air au voisinage de la face inférieure de la feuille de papier pour provoquer le décollement des filets d'air qui suivent le mouvement de défilement de la feuille de papier, ce moyen étant constitué par un organe d'injection d'air comprimé ou surpressé disposé à proximité et sous la lame;
- un autre moyen pour engendrer la circulation d'air et en même temps assurer l'évacuation d'une partie des particules en suspension est constitué par un caisson d'aspiration disposé en arrière du rideau d'eau de façon à aspirer l'air qui se trouve dans l'enceinte délimitée par le rideau d'eau, une cloison de séparation d'avec la partie humide de la machine, le cylindre et le sol, et provenant notamment du passage entre la paroi et le collecteur;
- et, notamment dans une installation comprenant de façon connue en soi une fosse à cassés pour récupérer les chutes de papier, un organe d'injection d'air est disposé en aval du rideau d'eau et à distance de celui-ci, en étant orienté vers le bas pour entraîner un mouvement d'air le long du rideau d'eau vers la fosse à cassés. Dans cette hypothèse, un caisson d'aspiration d'air est disposé en dessous de l'organe d'injection d'air. Dans ce dernier cas la solution de l'invention est particulièrement efficace pour évacuer vers la fosse à cassés les chutes de papier lors d'une rupture volontaire ou non de la feuille;
- un guide aérodynamique sans contact de la feuille et situé au-dessus de celle-ci, désigné par le terme « foil » généralement, est agencé immédiatement sous la lame de coupe de la feuille et s'étend vers le scanner de mesure de l'épaisseur. Cette disposition assure une grande stabilité de la feuille malgré l'injection d'air à proximité. Ce guide comprend de préférence une partie pivotante autour d'un axe transversal pour ouvrir un passage vers la fosse à cassés en cas d'utilisation de la lame de coupe pour détacher la feuille du cylindre chauffant afin de remplacer ou nettoyer la lame de crêpage.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique de côté d'une partie d'une installation de fabrication en continu de papier crêpé conforme aux enseignements de l'invention ;
- la figure 2 est une vue schématique en perspective illustrant un mode de réalisation d'un moyen formant rideau d'eau selon l'invention.
On a représenté sur la figure 1 une partie d'une installation 10 pour la fabrication en continu de papier crêpé.

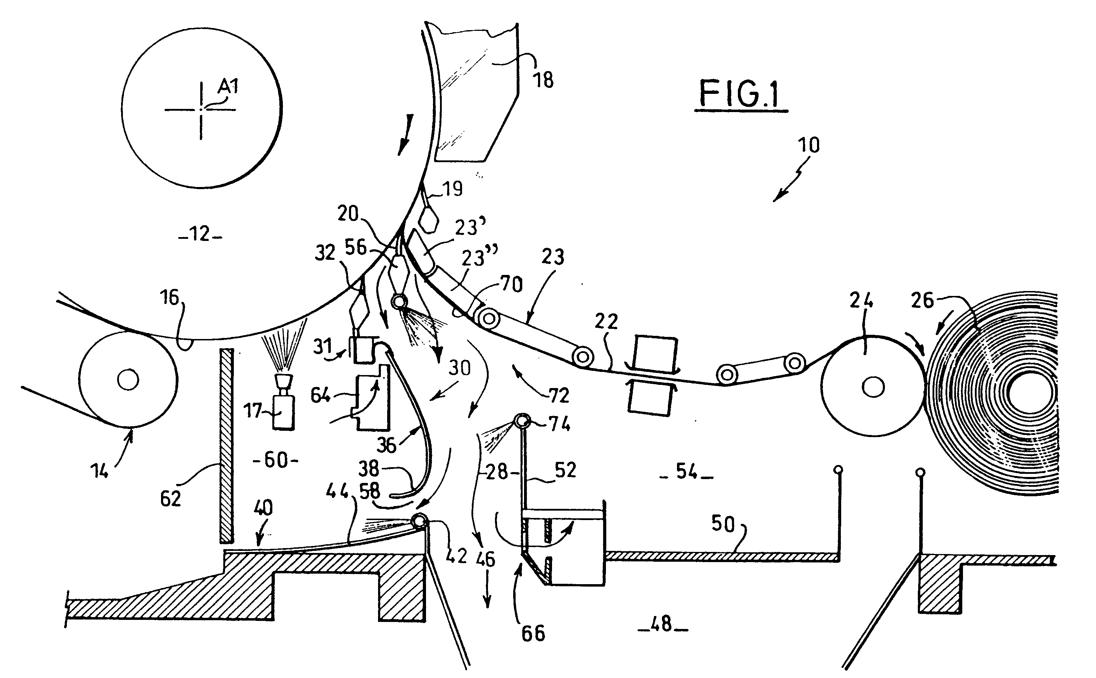

Plus particulièrement, l'installation représentée est la section sèche en aval d'une machine à papier à cylindre de séchage 12 du type connu sous le nom de "yankee". Le cylindre de séchage 12 est entraîné en rotation, dans le sens horaire en considérant la figure 1, autour de son axe transversal A1.

Un cylindre presseur 14 applique la feuille encore humide sur la surface cylindrique externe 16 du cylindre de séchage 12, une rampe de pulvérisation 17 représentée en amont a déposé au préalable une couche d'adhésif approprié. La feuille de papier suit alors le mouvement du cylindre, d'abord selon un trajet ascensionnel.

Une hotte de chauffage 18, qui recouvre la partie supérieure du cylindre 12, provoque le séchage de la feuille en conjonction avec le cylindre. Celle-ci est séchée jusqu'à une siccité d'environ 95% et transformée en une feuille de papier qu'il est nécessaire de décoller du cylindre 12.

A cet effet, une lame de crêpage 20, aussi appelée racle, est appuyée contre la surface externe 16 du cylindre 12. La feuille de papier, ainsi décollée du cylindre et crêpée, est alors guidée longitudinalement vers l'avant en direction d'une enrouleuse 24 qui permet de constituer des bobines 26 de papier. Des moyens 23 de guidage de la feuille sont prévus en aval de la lame 20 et ont pour fonction de la stabiliser également. Ces moyens 23 sont constitués avantageusement par des guides aérodynamiques sans contact situés au-dessus de la feuille, aussi appelés « foil », et s'étendent vers l'aval depuis la lame 19 de coupe de la feuille, disposée elle-même au-dessus de la lame de crêpage. Dans l'installation représentée le « foil » 23 comprend une partie amont en forme de sabot 23', disposée immédiatement sous la lame de coupe 19, suivie d'une partie pivotante 23" autour d'un axe transversal. Cette partie 23" permet d'ouvrir un passage, et continuer de décoller la feuille du cylindre en la coupant au moyen de la lame 19, quand il s'agit de changer la lame de crêpage ou la nettoyer. Cette ouverture permet ainsi d'évacuer la feuille jusqu'à ce qu'on reprenne la production.

L'opération de crêpage du papier 22 provoque la formation de beaucoup de poussières de papier et de fibres arrachées, notamment dans une zone située en dessous de la feuille de papier 22 et en dessous du cylindre 12. Des poussières et des amas d'autres matières sont également produits par la lame de nettoyage 32 située en aval par rapport au point décollement de la feuille.

Conformément aux enseignements de l'invention, l'installation 10 comporte une zone 28 dans laquelle il est établi une circulation d'air permettant de guider une grande partie des poussières produites en direction d'un moyen à rideau d'eau formant piège à poussières 30.

Cette zone 28 est délimitée dans sa partie supérieure et vers l'avant par la feuille de papier 22. En arrière de la lame de crêpage 20, la zone est délimitée par la surface cylindrique 16 de laquelle la feuille 22 a été décollée. Cette surface 16 est nettoyée par la lame de nettoyage 32 qui est agencée en arrière de la lame de crêpage 20 et dont le rôle est d'éliminer toute trace de papier subsistant sur le cylindre 12 après le décollement de la feuille de papier 22.

Juste en dessous de la lame de nettoyage 32, on a agencé le moyen 30 à rideau d'eau. L'eau s'écoule le long de la face avant d'une paroi 36 d'orientation générale sensiblement verticale, laquelle délimite par ailleurs la zone de circulation d'air 28 vers l'arrière. La paroi peut être réalisée avec une plaque de tôle ou en matière plastique, de préférence polie ou lisse afin de ne présenter aucune aspérité susceptible d'accrocher les particules fibreuses entraînées par l'eau du rideau d'eau vers le bas après leur captation par celui-ci.

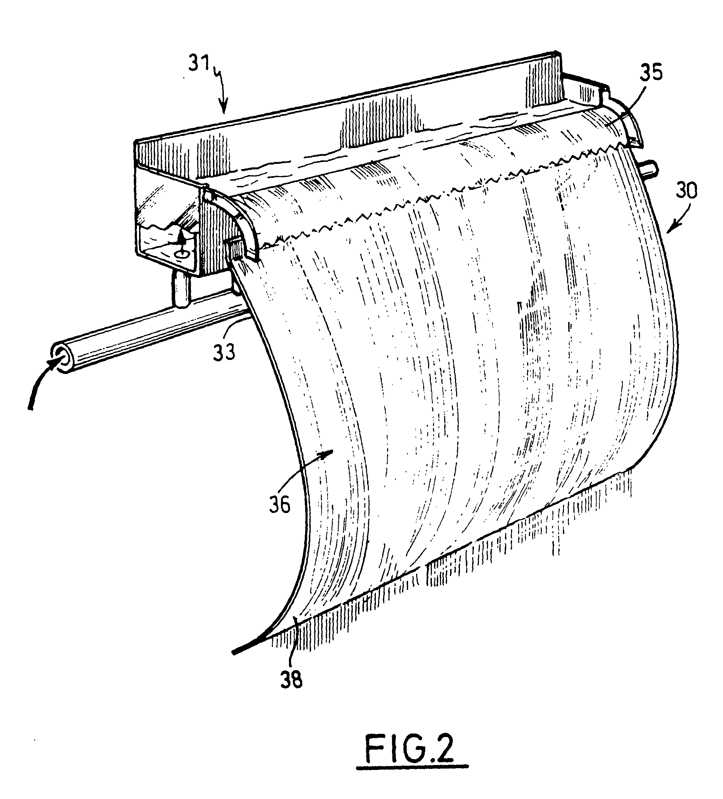

Le moyen à rideau d'eau 30 est plus particulièrement représenté sur la figure 2 sur laquelle on peut voir une goulotte horizontale 31 d'alimentation qui s'étend le long d'un bord supérieur 33 de la paroi 36. Cette goulotte 31, lorsqu'elle est remplie d'eau, avantageusement de l'eau clarifiée, déborde sur toute sa longueur par un bord avant 35 formant déversoir qui est recourbé vers le bas de manière à déverser un rideau d'eau sur la face avant 34 de la paroi 36. Afin d'améliorer les qualités de l'écoulement et de faciliter la formation d'un film homogène et turbulent, le bord inférieur du déversoir est dentelé. En effet, un film turbulent avec un débit compris entre 5 et 10 m3/h par mètre de largeur de machine, semble être une condition favorable pour éviter l'accumulation de fibres ou de morceaux de papier.

La paroi 36 n'est pas plane, elle est convexe sur sa partie inférieure 38 qui est courbée vers l'arrière. Elle surplombe un collecteur d'évacuation des poussières accumulées en ménageant un passage 58 pour l'air. Ce collecteur 40 est constitué par un receveur des liquides dont le fond 44 est incliné et orienté vers la partie humide de la machine à papier. Il comporte une rampe d'arrosage 42, alimentée avantageusement en eau clarifiée, qui aide à l'évacuation des amas. Cette dernière est agencée sensiblement en dessous de la partie inférieure 38 de la paroi 36 de sorte que le collecteur 40 s'étend en arrière de la paroi 36.

Sensiblement dans le prolongement de la paroi 36, et en avant de celle-ci, on trouve l'entrée 46 d'une fosse à cassés 48 de récupération des chutes de papier produites lorsque la feuille casse volontairement ou non. La fosse à cassés 48 peut recueillir aussi une partie des fibres arrachées au papier par la lame de crêpage 20, tout au moins celles dont le poids est suffisant pour qu'elles ne soient pas entraînées par l'air qui circule autour de la lame de crêpage 20.

En avant de la zone de circulation d'air 28, on trouve une passerelle transversale 50 qui s'étend au-dessus de la fosse à cassés 48 et en dessous de la feuille de papier 22 qui est guidée vers l'enrouleuse 24. Cette passerelle 50, qui permet l'intervention d'opérateurs sur la machine, comporte un garde-corps muni d'une tôle verticale lisse 52 qui délimite, à l'avant, la zone de circulation d'air 28.

La passerelle 50 permet à des opérateurs d'intervenir dans un espace 54 situé sensiblement en dessous de la feuille de papier 22, en avant de la zone de circulation d'air 28.

Conformément aux enseignements de l'invention, il est prévu des moyens pour établir dans la zone de circulation d'air 28 des courants et des flux d'air qui permettent de guider les poussières, notamment en direction du moyen à rideau d'eau 30.

Ainsi, il est créé un premier flux d'air, du haut vers le bas, dans cette zone de circulation d'air 28 grâce d'une part à une première rampe d'injection d'air 56 agencée immédiatement en dessous de la lame de crêpage 20 et qui injecte de l'air comprimé ou surpressé vers le bas entre la feuille de papier 22 et le rideau d'eau 30. Cet air en induit une grande quantité provenant des cotés de la machine. Le flux d'air qui est créé par la première rampe 56 d'injection d'air permet par ailleurs de provoquer un décollement au moins partiel des filets d'air qui s'écoulent le long de la face inférieure 70 de la feuille de papier 22 du fait du défilement de cette dernière. La disposition du support aérodynamique 23 immédiatement en aval de la lame 19 permet une action efficace du dispositif d'injection d'air 56. Sans ce moyen, la feuille manquerait de stabilité et nécessiterait de limiter la masse d'air injectée.

Au bas de la zone 28, deux zones d'aspiration de l'air sont créées. La première d'entre elles est destinée à créer un flux d'air important dans le passage 58 de section réduite aménagé entre la partie inférieure 38 de la paroi 36 du rideau d'eau et le collecteur 40.

A cet effet, une cloison 62 sensiblement verticale est agencée en arrière de la paroi 36 de manière à délimiter une enceinte 60 sensiblement fermée qui est délimitée longitudinalement vers l'avant par la paroi 36, vers l'arrière par la cloison de séparation 62 et qui est délimitée verticalement vers le haut par le cylindre 12 et vers le bas par la face supérieure 44 du collecteur 40.

Cette enceinte 60 est maintenue en dépression par rapport à la zone de circulation d'air 28 grâce à un caisson d'aspiration 64. Ainsi, il se crée une aspiration importante au travers du passage 58 sous le rideau d'eau entre la zone de circulation d'air 28 et l'enceinte arrière 60. Le caisson d'aspiration a pour fonction également d'éliminer les particules de poussières et d'humidité générées au niveau de cette enceinte. Il est relié à la source de vide par un séparateur approprié pour éliminer les particules solides, essentiellement fibreuses, et liquides entraînées dans le flux d'air. Le débit d'air au travers du caisson est compris entre 1000 et 3000 m3/h par mètre de largeur.

Comme on peut le voir sur les figures, la partie inférieure 38 de la paroi 36 du piège 30 est convexe et incurvée vers l'arrière de telle sorte que le flux d'air qui s'écoule du haut vers le bas tend à épouser le contour de la paroi 36 si bien que les poussières portées par ce flux d'air tendent à être captées par le film ou rideau d'eau qui s'écoule le long de la face avant 34 du piège 30.

Lorsque l'eau du rideau d'eau arrive au bas de la paroi 36, elle tombe sur le collecteur d'évacuation 40 en formant par ailleurs une barrière d'eau en travers du seuil 58 au travers duquel circule une grande partie du flux d'air.

Comme on peut le voir sur la figure 1, un second caisson d'aspiration 66 est agencé au niveau de l'entrée 46 de la fosse à cassés 48.
Agencé au plus bas dans la zone de circulation 28, et en avant de celle-ci, il permet de recueillir la partie du flux d'air qui n'a pas été aspirée par l'enceinte arrière 60. Il permet également d'aspirer les poussières en suspension dans la fosse à cassés 48.

L'installation selon l'invention comporte des moyens pour créer, dans la zone de circulation d'air 28, un courant d'air qui s'écoule sensiblement en sens contraire par rapport au défilement de la feuille de papier 22 de manière à éviter que des poussières ne soient entraînées en dehors de cette zone de circulation 28.

A cet effet, on peut remarquer que la tôle 52 disposée le long du garde-corps de la passerelle 50 délimite avec la feuille de papier 22 un seuil 72 entre la zone 28 de circulation d'air et l'espace 54 délimité au-dessus de la passerelle 50.

Le long d'un bord supérieur de cette tôle 52, qui est en regard de la face inférieure 70 de la feuille de papier 22, une seconde rampe 74 de projection d'air comprimé ou surpressé est disposée de manière à projeter de l'air en direction de l'intérieur de la zone de circulation d'air 28. Plus particulièrement, la projection d'air s'effectue vers le bas et vers l'arrière, sensiblement en direction du rideau d'eau.

En combinaison avec l'effet de dépression créé par l'aspiration d'air au bas de cette zone 28, il s'établit ainsi au niveau du seuil 72 un courant d'air circulant le long de la face inférieure 70 de la feuille de papier 22, depuis l'espace avant 54 en direction de la zone de circulation d'air 28, c'est-à-dire en sens contraire du défilement de la feuille de papier 22. Ainsi, ce courant d'air provoque un décollement des filets d'air qui tendent normalement à suivre le défilement de la feuille de papier 22, ces filets d'air étant déviés vers l'intérieur et vers le bas de la zone de circulation d'air 28 pour être aspirés soit au travers du passage 58, soit au travers du second dispositif d'aspiration 66.

L'aménagement de la zone de circulation d'air 28 permet donc qu'une grande partie des poussières créées par le crêpage du papier soit récupérée par le rideau d'eau 30 et évacuée par le collecteur d'évacuation 40.

Par rapport à des dispositifs utilisant uniquement des caissons d'aspiration d'air pour évacuer les poussières, on peut ainsi réduire de manière très importante le volume d'air qu'il est nécessaire de faire circuler, volume d'air qui doit nécessairement être traité pour ne pas rejeter de poussières dans l'atmosphère. Cela représente un avantage économique important.

Bien entendu, le rideau d'eau 30 qui est ici réalisé sous la forme d'un film s'écoulant sur une paroi sensiblement verticale peut être réalisé suivant d'autres techniques équivalentes.

Un système de récupération et d'évacuation des poussières tel qu'il vient d'être décrit présente par ailleurs l'avantage de pouvoir être adapté aisément sur une installation existante. Il est de plus compatible avec les dispositifs connus de confinement de l'installation.

## Revendications

1. Machine pour la fabrication en continu de papier crêpé du type comportant un cylindre de séchage (12), une lame (20) formant racle et une enrouleuse (24), la feuille de papier après séchage étant décollée du cylindre par la lame et mise en bobine par l'enrouleuse, avec une installation de dépoussiérage, **caractérisée en ce qu'**un moyen (30) formant rideau d'eau pour capter et entraîner les particules fibreuses en suspension dans l'air, est disposé, transversalement à la direction de défilement de la feuille de papier, sous la feuille entre le cylindre (12) et l'enrouleuse (24)

2. Machine selon la revendication 1, **caractérisée en ce que** le moyen (30) formant rideau d'eau comporte une paroi (36) sensiblement verticale et un moyen d'alimentation en eau avec un déversoir disposé de façon à former un film d'eau sur une face (34) de la paroi (36).

3. Machine selon la revendication 2 **caractérisée en ce que** l'écoulement de l'eau le long de la paroi (36) est turbulent.

4. Machine selon l'une des revendications précédentes **caractérisée en ce que** le moyen (30) formant rideau d'eau est disposé sous et à proximité de la lame de crêpage (20).

5. Machine selon la revendication 4, **caractérisée en ce qu'**un collecteur (40) de liquide, de préférence pourvu d'une rampe d'aspersion d'eau (42), est disposé en dessous de la paroi (36) tout en ménageant un passage d'air (58).

6. Machine selon l'une des revendications précédentes, **caractérisée en ce qu'**elle comprend des moyens pour engendrer une circulation d'air vers le bas au moins dans la zone (28) environnant le moyen (30) formant rideau d'eau, de façon à favoriser le captage des dites particules fibreuses.

7. Machine selon l'une des revendications 4 à 6, **caractérisée en ce qu'**elle comprend un moyen (56) d'injection d'air comprimé ou surpressé, disposé à proximité et sous la lame (20) pour créer un courant d'air au voisinage de la face inférieure (70) de la feuille de papier (22) en aval de la lame (20) et provoquer le décollement des filets d'air qui suivent le mouvement de défilement de la feuille de papier (22).

8. Machine selon l'une des revendications 4 à 7, **caractérisée en ce qu'**elle comprend un caisson d'aspiration d'air (64) et de particules fibreuses disposé le long de la paroi (36) en arrière de la face (34) de la paroi (36) sur laquelle le film d'eau est formé, de façon à aspirer l'air dans l'enceinte (60) délimitée par la paroi (36), une cloison de séparation (62) sensiblement verticale, le cylindre (12) et le sol, en provenance notamment du passage d'air (58) entre la paroi (36) et le collecteur (40).

9. Machine selon l'une des revendications 4 à 8, comprenant de façon connue en soi une fosse à cassés pour récupérer les chutes de papier **caractérisée en ce qu'**elle comprend un moyen (74) d'injection d'air, disposé en aval du moyen (30) formant rideau d'eau et à distance de celui-ci, orienté vers le bas pour entraîner un mouvement d'air le long du moyen (30) formant rideau d'eau vers la dite fosse à cassés.

10. Machine selon la revendication 9, **caractérisée en ce qu'**elle comprend un caisson (66) d'aspiration d'air et de particules fibreuses disposé sous le moyen (74) d'injection d'air placé en aval du moyen (30) formant rideau d'eau.

11. Machine selon l'une des revendications précédentes comprenant une lame de coupe (19) de la feuille disposée au-dessus de la lame de crêpage (20) **caractérisée en ce qu'**elle comprend un guide aérodynamique (23) sans contact de la feuille qui s'étend depuis la lame de coupe de la feuille et sous celle-ci.

12. Machine selon la revendication précédente **caractérisée en ce que** le dit guide (23) comprend une partie pivotante (23") autour d'un axe transversal pour ouvrir un passage d'évacuation de la feuille en cas de détachement de celle-ci par la lame de coupe (19) au lieu de la lame de crêpage.

## Patentansprüche

1. Maschine zur kontinuierlichen Herstellung von Krepp-Papier, welche eine Trockenwalze (12), ein einen Abschaber bildendes Messer (20) und eine Aufrollvorrichtung (24) aufweist, bei der das Papierblatt nach dem Trocknen durch das Messer von der Walze abgehoben und durch die Aufrollvorrichtung in Form einer Rolle aufgerollt wird, mit einer Entstaubungseinrichtung, **dadurch gekennzeichnet, daß** ein einen Wasservorhang bildendes Mittel (30) zur Auf- und Mitnahme der fasrigen, in der Luft in Suspension befindlichen Teilchen quer zur Laufrichtung des Papierblattes unter dem Blatt zwischen der Walze (12) und der Aufrollvorrichtung (24) angeordnet ist.

2. Maschine nach Anspruch 1, **dadurch gekennzeichnet, daß** ein einen Wasservorhang bildendes Mittel (30) eine im wesentlichen vertikale Wand (36) und ein Mittel zur Wasserzufuhr mit einem so angeordneten Fluter aufweist, daß er einen Wasserfilm auf einer Seite (34) der Wand (36) bildet.

3. Maschine nach Anspruch 2, **dadurch gekennzeichnet, daß** das Abfließen des Wassers entlang der Wand (36) turbulent ist.

4. Maschine nach irgendeinem der vorangehenden Ansprüche, **dadurch gekennzeichnet, daß** das einen Wasservorhang bildende Mittel (30) unter und in Nähe des Kreppmessers (20) angeordnet ist.

5. Maschine nach Anspruch 4, **dadurch gekennzeichnet, daß** ein bevorzugterweise mit einer Wasserberieselungsrampe versehener Flüssigkeitskollektor (40) unterhalb der Wand (36) bei gleichzeitiger Einarbeitung eines Luftdurchlasses (58) angeordnet ist.

6. Maschine nach irgendeinem der vorangehenden Ansprüche, **dadurch gekennzeichnet, daß** sie Mittel zur Erzeugung eines nach unten gerichteten Luftkreislaufes mindestens im einen einen Wasservorhang bildende Mittel (30) umgebenden Bereich (28) aufweist, um die Aufnahme der besagten fasrigen Teilchen zu begünstigen.

7. Maschine nach einem der Ansprüche 4 bis 6, **dadurch gekennzeichnet, daß** sie ein Mittel (56) zur Injektion von komprimierter oder überkomprimierter Luft aufweist, welches in der Nähe und unter dem Messer (20) angeordnet ist, um eine Luftströmung in der Nähe der Oberseite (70) des Papierblattes (22) dem Messer (20) nachgeschaltet zu erzeugen und das Abheben der dünnen Luftströme die der Laufbewegung des Papierblattes (22) folgen, hervorzurufen.

8. Maschine nach einem der Ansprüche 4 bis 7, **dadurch gekennzeichnet, daß** sie einen Ansaugkasten (64) für die Luft und fasrige Teilchen aufweist, welcher entlang der Wand (36) nach hinten von der Seite (34) der Wand (36), auf der sich der Wasserfilm bildet, angeordnet ist, um die Luft, die sich in der von der Wand (36), einer im wesentlichen vertikalen Trennwand (62), der Walze (12) und dem Boden begrenzten Einfassung befindet, anzusaugen, wobei die Luft insbesondere aus dem Luftdurchlaß (58) zwischen der Wand (36) und dem Kollektor (40) kommt.

9. Maschine nach einem der Ansprüche 4 bis 8, welche auf eine an sich bekannte Weise eine Papierausschußgrube zur Aufnahme des Papierabfalls aufweist, **dadurch gekennzeichnet, daß** sie ein Luftinjektionsmittel (74) aufweist, welches dem einen Wasservorhang bildenden Mittel (30) und von diesem beabstandet angeordnet ist und nach unten gerichtet ist, um eine Luftbewegung entlang dem einen Wasservorhang bildenden Mittel (30) in Richtung der Papierausschußgrube mitzuziehen.

10. Maschine nach Anspruch 9, **dadurch gekennzeichnet, daß** sie einen Ansaugkasten (64) für die Luft und fasrige Teilchen aufweist, welcher unter dem einem Wasservorhang bildenden Mittel (30) nachgeordneten Luftinjektionsmittel (74) angeordnet ist.

11. Maschine nach irgendeinem der vorangehenden Ansprüche, welche ein über dem Kreppmesser (20) angeordnetes Schneidemesser (19) aufweist, **dadurch gekennzeichnet, daß** sie eine aerodynamische Führung (23) ohne Blattkontakt aufweist, die sich entlang dem Schneidemesser für das Blatt und unter diesem erstreckt.

12. Maschine nach irgendeinem der vorangehenden Ansprüche, **dadurch gekennzeichnet, daß** die besagte Führung einen um eine Querachse schwenkbaren Teil (23) aufweist, der dazu bestimmt ist, einen Evakuierungsdurchlaß für das Blatt zu öffnen für den Fall, daß dieses durch das Schneidemesser (19) anstatt durch das Kreppmesser abgehoben wird.

## Claims

1. Machine for continuous production of crepe paper, of the type comprising a drying roller (12), a blade (20) which forms a scraper, and a winder (24), the sheet of paper, after having been dried, being detached from the roller by the blade and put onto a bobbin by the winder, with a dust extraction installation, **characterised in that** it comprises a means (30) which forms a curtain of water, in order to capture and entrain the fibrous particles in suspension in the air, which means is disposed transversely to the direction of running of the sheet of paper, beneath the sheet, between the roller (12) and the winder (24).

2. Machine according to claim 1, **characterised in that** the means (30) which forms a curtain of water comprises a substantially vertical wall (36), and a means for supply of water, with a spillway which is disposed such as to form a film of water on a surface (34) of the wall (36).

3. Machine according to claim 2, **characterised in that** the flow of water along the wall (36) is turbulent.

4. Machine according to any one of the preceding claims, **characterised in that** the means (30) which forms the curtain of water is disposed beneath, and in the vicinity of, the creping blade (20).

5. Machine according to claim 4, **characterised in that** a collector (40) for liquid, which is preferably provided with a water spraying unit (42) is disposed beneath the wall (36), whilst providing a passage for air (58).

6. Machine according to any one of the preceding claims, **characterised in that** it comprises means for generating circulation of air downwards, at least in the area (28) which surround the means (30) which forms a curtain of water, such as to assist capturing of the said fibrous particles.

7. Machine according to any one of claims 4 to 6, **characterised in that** it comprises a means (56) for injection of compressed or overpressured air, which is disposed in the vicinity of, and beneath, the blade (20), in order to create a current of air in the vicinity of the lower surface (70) of the sheet of paper (22), downstream from the blade (20), and to give rise to release of thin jets of air, which follow the movement of running of the sheet of paper (22).

8. Machine according to any one of claims 4 to 7, **characterised in that** it comprises a chamber (64) for suction of air and fibrous particles, which is disposed along the wall (36), to the rear of the surface (34) of the wall (36) on which the film of water is formed, such as to suck up the air in the enclosure (60) delimited by the wall (36), a substantially vertical separation partition (62), the roller (12) and the ground, which air is obtained in particular from the passage of air (58) between the wall (36) and the collector (40).

9. Machine according to any one of claims 4 to 8, comprising in a known manner a damaged-paper trench for recuperation of paper which has fallen, **characterised in that** it comprises a means (74) for injection of air, which is disposed downstream from the means (30) which forms a curtain of water, spaced from the latter, and is oriented downwards in order to give rise to movement of air along the means (30) which forms a curtain of water, towards the said damaged-paper trench.

10. Machine according to claim 9, **characterised in that** it comprises a chamber (66) for suction of air and fibrous particles, which is disposed beneath the means (74) for injection of air, placed downstream from the means (30) which forms a curtain of water.

11. Machine according to any one of the preceding claims, comprising a blade (19) to cut the sheet, which is disposed above the creping blade (20), **characterised in that** it comprises a aerodynamic guide (23) which has no contact with the sheet, and extends from the blade for cutting of the sheet, and beneath it.

12. Machine according to the preceding claim, **characterised in that** the said guide (23) comprises a part (23") which pivots around a transverse shaft, in order to open up a passage for removal of the sheet, in the event of detachment of the latter by the cutting blade (19) instead of by the creping blade.
